Europäisches Patentamt

European Patent Office

Office européen des brevets

(19)

(11) **EP 0 928 812 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(51) Int Cl.[7]: **C08L 75/04**, C08G 18/73, C08G 18/66, C08G 18/44

(21) Anmeldenummer: **98124803.2**

(22) Anmeldetag: **29.12.1998**

(54) **Aliphatische sinterfähige thermoplastische Polyurethanformmassen mit reduzierter mechanischer Festigkeit**

Frittable thermoplastic molding compositions with reduced mechanical strength containing aliphatic polyurethane

Compositions à mouler thermoplastiques frittables à résistance mécanique réduite contenant un polyuréthane aliphatique

(84) Benannte Vertragsstaaten:
**BE DE ES FR GB IT NL PT SE**

(30) Priorität: **07.01.1998 DE 19800287**

(43) Veröffentlichungstag der Anmeldung:
**14.07.1999 Patentblatt 1999/28**

(73) Patentinhaber:
• **Bayer Aktiengesellschaft**
 **51368 Leverkusen (DE)**
• **Benecke-Kaliko Aktiengesellschaft**
 **D-30419 Hannover (DE)**

(72) Erfinder:
• **Kaufhold, Wolfgang Dr.**
 **51061 Köln (DE)**

• **Hoppe, Hans-Georg**
 **42799 Leichlingen (DE)**
• **Ohlinger, Rainer Dr.**
 **30519 Hannover (DE)**
• **Kalbe, Michael Dr.**
 **69469 Weinheim (DE)**
• **Kruse, Hans-Hinrich Dr.**
 **30890 Barsinghausen (DE)**

(74) Vertreter: **Steiling, Lothar, Dr.**
 **Bayer AG**
 **Konzernbereich RP**
 **Patente und Lizenzen**
 **51368 Leverkusen (DE)**

(56) Entgegenhaltungen:
**EP-A- 0 324 353    EP-A- 0 422 896**
**DE-C- 4 203 307**

**Beschreibung**

Die Erfindung betrifft lichtstabile, sinterfähige thermoplastische Polyurethanformmassen mit reduzierter mechanischer Festigkeit, die sich nach dem Powder-slush-Verfahren verarbeiten lassen. Die erfindungsgemäßen Formmassen eignen sich besonders zur Herstellung genarbter Sinterfolien für die Innenauskleidung von Verkehrsmitteln, insbesondere als Abdeckung für Airbags in Kraftfahrzeugen.

Aliphatische thermoplastische Polyurethane werden für den Einsatz in der Innenausstattung von Kraftfahrzeugen, z.B in Oberflächenverkleidungen von Instrumententafeln, bereits beschrieben, beispielsweise in DE-C 42 03 307. Naturgemäß besteht hierbei der Wunsch, ein einheitliches Aussehen der gesamten Oberflächenverkleidung zu erreichen und diese daher aus einem einzigen Material zu fertigen. Es tritt hierbei jedoch das Problem auf, daß sich die gängigen aliphatischen thermoplastischen Polyurethane mit hoher Lichtechtheit und Temperaturstabilität aufgrund ihrer hervorragenden mechanischen Eigenschaften, insbesondere der hohen Reißfestigkeit, nicht als Abdeckung für Airbags eignen. Es bestand daher die Aufgabe, Materialien mit hoher Lichtechtheit und Temperaturstabilität zu entwickeln, die eine geringere mechanische Festigkeit aufweisen als die bekannten thermoplastischen Polyurethane.

In der DE-AS 16 94 135 ist ein Verfahren zur Herstellung von vernetzten Polyurethanen aus höhermolekularen, linearen Polyhydroxylverbindungen beschrieben, welche ein Gemisch aus 70 bis 90 Gew.-% Hexandiolpolycarbonat, das durch Umsetzung von 1,6-Hexandiol und Diarylcarbonaten hergestellt worden ist, und das 10 bis 30 Gew.-% Mischpolyester aus u.a. Adipinsäure, 1,6-Hexandiol und 2,2'-Dimethyl-1,3-Propandiol-Diisocyanate und niedermolekularen, mindestens zwei mit Isocyanatgruppen reagierende Wasserstoffatome enthaltenden Kettenverlängerungsmittel, zum Beispiel 1,4-Butandiol, enthält. Es sollen ausschließlich aromatische Diisocyanate eingesetzt werden. Die Vernetzung der Polyurethane wird durch Anwendung eines Überschusses an Diisocyanaten erreicht. Bei aus diesen Ausgangsstoffen hergestellten Polyurethanelastomeren bleibt die durch das Polycarbonat bedingte hohe Hydrolysebeständigkeit erhalten. Darüber hinaus zeigen derartige Elastomere aber auch eine verbesserte Kältefestigkeit und Verarbeitbarkeit gegenüber den Elastomeren, zu deren Herstellung als Polyolkomponente reines 1,6-Hexandiolpolycarbonat eingesetzt wurde. Die bessere Verarbeitbarkeit wirkt sich besonders in der flüssigen Phase -beispielsweise beim Gießverfahren- aus, da die verwendeten Polyester-Polycarbonatgemische bei den Verarbeitungstemperaturen eine niedrigere Viskosität aufweisen als das reine Hexandiolpolycarbonat, weswegen die resultierende Folie leichter blasenfrei vergossen werden kann. Die nach diesem Verfahren hergestellten Produkte können im Maschinen- und Fahrzeugbau eingesetzt werden.

In DE-C 42 03 307 ist eine thermoplastisch in Form von Sinterpulver verarbeitbare Polyurethanformmasse zur Herstellung genarbter Sinterfolien beschrieben, wobei das Pulver ausschließlich aus linearen, aliphatischen Komponenten besteht. Die Polyolkomponente setzt sich zusammen aus 60 bis 80 Gewichtsteilen eines aliphatischen Polycarbonatdiols mit einem Molekulargewicht $\overline{M}_n$ von 2000 und 40 bis 20 Gewichtsteilen eines Polydiols auf Basis Adipinsäure, Hexandiol und Neopentylglykol mit einem Molekulargewicht $\overline{M}_n$ von 2000. Ferner enthält die Mischung 1,6-Hexamethylendiisocyanat in einem Äquivalenzverhältnis von 2,8:1,0 bis 4,2:1,0 bezogen auf das Polyolgemisch und 1,4-Butandiol als Kettenverlängerungsmittel, wobei das Äquivalenzverhältnis des 1,4-Butandiols bezogen auf das Polygemisch 1,3:1,0 bis 3,3:1,0 beträgt. Diese Materialien zeichnen sich unter anderem durch eine hohe Zug-, Einreiß- und Weiterreißfestigkeit aus. Auch EP-A 399 272 offenbart Polyurethanfolien mit guten mechanischen Eigenschaften, insbesondere hoher Reißfestigkeit.

Es wurde nun gefunden, daß sich Materialien mit hoher Lichtechtheit und Temperaturstabilität erhalten lassen, die eine geringere mechanische Festigkeit aufweisen als die bekannten thermoplastischen Polyurethane, wenn man lichtstabile thermoplastische Polyurethane mit bestimmten weiteren Komponenten modifiziert.

Gegenstand der Erfindung sind daher sinterfähige thermoplastische Formmassen enthaltend ein thermoplastisches Polyurethan auf Basis eines aliphatischen Diisocyanats sowie mindestens einen weiteren Vertreter aus der Polyvinylchlorid (PVC), Polymethylmethacrylat (PMMA), Ethylen/Vinylacetat-Copolymere (EVA) und Weichmacher umfassenden Gruppe. Bevorzugt weisen die erfindungsgemäßen Formmassen eine Reißfestigkeit bei Raumtemperatur von nicht mehr als 20 N/mm$^2$, besonders bevorzugt nicht mehr als 15 N/mm$^2$ und eine Reißdehnung bei Raumtemperatur von nicht mehr als 450%, besonders bevorzugt nicht mehr als 300% (jeweils gemessenen nach EN ISO 527-3/5) auf. Bevorzugt beträgt die Reißfestigkeit der erfindungsgemäßen Formmassen bei -35°C nicht mehr als 30 N/mm$^2$, besonders bevorzugt nicht mehr als 25 N/mm$^2$ und die Reißdehnung bei -35°C nicht mehr als 200%, besonders bevorzugt nicht mehr als 100% (jeweils gemessenen nach EN ISO 527-3/2). Der Schmelzindex (MVR) der erfindungsgemäßen Formmassen, gemessen bei 200°C mit einer Last von 2,16 kg, beträgt bevorzugt mindestens 10 cm$^3$/10min, besonders bevorzugt mindestens 20 cm$^3$/10min.

In einer bevorzugten Ausführungsform enthalten die erfindungsgemäßen Formmassen

50 bis 90 Gew.-Teile thermoplastisches Polyurethan auf Basis eines aliphatischen Diisocyanats,
10 bis 50 Gew.-Teile PMMA,
0 bis 10 Gew.-Teile EVA,
0 bis 10 Gew.-Teile Weichmacher.

Beispiele für besonders bevorzugte Ausführungsformen sind Formmassen, die pro 100 Gew.-Teile Formmasse bis zu 40 Gew.-Teile, insbesondere bis zu 30 Gew.-Teile PMMA enthalten und solche, die zusätzlich neben PMMA bis zu 10 Gew.-Teile, insbesondere bis zu 7 Gew.-Teile, Weichmacher oder EVA enthalten

In einer weiteren bevorzugten Ausführungsform enthalten die erfindungsgemäßen Formmassen

  10 bis 90 Gew.-Teile thermoplastisches Polyurethan auf Basis eines aliphatischen Diisocyanats und

  10 bis 90 Gew.-Teile PVC.

Besonders bevorzugt sind Formmassen, die pro 100 Gew.-Teile Formmasse bis zu 50 Gew.-Teile PVC enthalten.

Die Polyurethankomponente der erfindungsgemäßen Formmasse wird hergestellt durch Umsetzung von

A) organischem Diisocyanat, wobei mindestens ein Teil des Diisocyanats ein aliphatisches Diisocyanat ist,

B) linearem hydroxylterminiertem Polyol mit einem einem mittleren Molekulargewicht $\overline{M}_n$ von 1000 bis 4000,

C) Diolen oder Diaminen mit einem Molekulargewicht von 60 bis 500 als Kettenverlängerer,

wobei das Äquivalenzverhältnis von Isocyanat und Diol von 2,3:1,0 bis 6,2:1,0 und das Äquivalenzverhältnis von Kettenverlängerer und Diol 1,3:1,0 bis 5,2:1,0 betragen.

Als organische Diisocyanate A) können aliphatische und cycloaliphatische Diisocyanate eingesetzt werden, wie sie z.B. in Justus Liebigs Annalen der Chemie 562, S.75-136 beschrieben sind. Beispielhaft seien genannt Hexamethylendiisocyanat, Isophorondiisocyanat, 1,4-Cyclohexandiisocyanat, 1-Methyl-2,4-Cyclohexandiisocyanat und 1-Methyl-2,6-Cyclohexandiisocyanat sowie die entsprechenden Isomerengemische und 4,4'-, 2,4'- und 2,2'-Dicyclohexylmethandiisocyanat sowie die entsprechenden Isomerengemische. Bevorzugt besteht das eingesetzte organische Diisocyanat zu mindestens 50 Gew.-% aus 1,6-Hexamethylendiisocyanat.

Bei Anwendungen mit geringeren Anforderungen an die Lichtstabilität, z.B bei dunkel eingefärbten Formmassen, können Teile des aliphatischen Diisocyanats durch aromatische Diisocyanate ersetzt werden. Höchstens 40 mol-% des aliphatischen Diisocyanates können durch aromatische Diisocyanate ersetzt sein. Diese sind ebenfalls in Justus Liebigs Annalen der Chemie 562, S.75-136 beschrieben. Beispiele sind 2,4 Toluylendiisocyanat, Gemische aus 2,4- und 2,6 Toluylendiisocyanat, 4,4'-, 2,2'und 2,4'-Diphenylmethandiisocyanat, Gemische aus 2,4- und 4,4'-Diphenylmethandiisocyanat, urethanmodifizierte flüssige 2,4- und/oder 4,4'-Diphenylmethandiisocyanate, 4,4'-Diisocyanatodiphenylethan(1,2) und 1,5 Naphthylendiisocyanat.

Als Komponente B) werden lineare hydroxylterminierte Polyole mit einem Molekulargewicht von 1000 bis 4000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester und Polycarbonat-Diole oder Gemische aus diesen.

Geeignete Polyester-Diole können beispielsweise aus Dicarbonsäuren mit 2 bis 12 Kohlenstoff-atomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyester-Diole besitzen Molekulargewichte von 1000 bis 4000 und können einzeln oder in Form von Mischungen untereinander zur Anwendung kommen.

Bei Anwendungen mit geringeren Anforderungen an die Lichtstabilität, z.B. bei dunkel eingefärbten Formmassen, können Teile der Polyester- bzw. Polycarbonat-Diole durch Polyether-Diole ersetzt werden.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, daß ein thermoplastisch verarbeitbares Produkt entsteht Die im wesentlichen linearen Polyether-Diole besitzen Molekulargewichte von 1000 bis 4000. Sie können sowohl einzeln als auch in Form von Mischungen untereinander zur Anwendung kommen.

Als Kettenverlängerungsmittel C) werden aliphatische Diole oder Diamine mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol, oder (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N'-Dimethyl-ethylendiamin. Es können auch Gemische der oben genannten Kettenverlängerer eingesetzt werden. Daneben können auch kleinere Mengen an Triolen zugesetzt werden.

Bei Anwendungen mit geringeren Anforderungen an die Lichtstabilität, z.B bei dunkel eingefärbten Formmassen, können Teile der aliphatischen Diole und Diamine durch aromatische Diole und Diamine ersetzt werden. Beispiele für geeignete aromatische Diole sind Diester der Terephthalsäure mit Glykolen mit 2 bis 4 Kohlenstoff-atomen, wie z. B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, und ethoxylierte Bisphenole. Beispiele für geeignete aromatische Diamine sind. 2,4-Toluylen-diamin und 2,6-Toluylen-diamin, 3,5-Diethyl-2,4-toluylen-diamin und 3,5-Diethyl-2,6-toluylen-diamin und primäre mono-, di-, tri- oder tetraalkylsubstituierte 4,4'-Diaminodiphenylmethane.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Bevorzugt wird zur Herstellung der erfindungsgemäßen Formmassen ein aliphatisches thermoplastisches Polyurethan eingesetzt, das erhalten wird durch Umsetzung von

100 Gewichtsteilen eines Polyolgemisches aus

30 bis 80 Gewichtsteilen eines aliphatischen Polycarbonatdiols mit einem mittleren Molekulargewicht $\overline{M}_n$ von 1800 bis 2200 und

70 bis 20 Gewichtsteilen eines Polyalkandioladipats oder eines Polycaprolactondiols mit einem mittleren Molekulargewicht $\overline{M}_n$ von 1000 bis 4000 und

1,6-Hexamethylendiisocyanat in einem Äquivalenzverhältnis von 2,3:1,0 bis 6,2:1,0, bezogen auf das auf das Polyolgemisch, und

1,4-Butandiol als Kettenverlängerungsmittel in einem Äquivalenzverhältnis von 1,3:1,0 bis 5,2:1,0, bezogen auf das Polyolgemisch,

wobei die NCO-Kennzahl, gebildet aus dem mit 100 multiplizierten Quotienten der Äquivalenzverhältnisse von Isocyanatgruppen und der Summe der Hydroxylgruppen von Polyolgemisch und Kettenverlängerungsmittel, 96 bis 99 beträgt.

Vorzugsweise wird bei der kontinuierlichen Herstellung der thermoplastischen Polyurethane gemäß dem Extruder- oder Bandverfahren ein Katalysator eingesetzt. Geeignete Katalysatoren sind nach dem Stand der Technik bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Neben den TPU-Komponenten und gegebenenfalls Katalysatoren können auch Hilfsmittel und Zusatzstoffe zugesetzt werden. Genannt seien beispielsweise Gleitmittel, wie Fettsäureester, deren Metallseifen, Fettsäureamide und Silikonverbindungen, Antiblockmittel, Inhibitoren, Stabilisatoren gegen Hydrolyse, Licht, Hitze und Verfärbung, Flammschutzmittel, Farbstoffe, Pigmente, anorganische und organische Füllstoffe und Verstärkungsmittel, die nach dem. Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: »High Polymers", Band XVI, Polurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Die PMMA-Komponente sollte so gewählt werden, daß der Schmelzindex MVR bei 200°C und 21,6 kg zwischen 5 und 70 liegt.

Die EVA-Komponente sollte so gewählt werden, daß der Schmelzindex MVR bei 200°C und 2,16 kg zwischen 10 und 80 liegt und der Vinylacetatanteil mindestens 20% beträgt.

Eine Übersicht über in den erfindungsgemäßen Formmassen einsetzbare Weichmacher findet sich in R. Gächter, H. Müller (Ed.): Taschenbuch der Kunststoff-Additive, 3. Ausgabe, Hanser Verlag, München 1989. Für die erfindungsgemäßen Formmassen eignen sich insbesondere solcheVerbindungen, die geringe Flüchtigkeit zeigen. Beispiele hierfür sind Phthalsäure-$C_{10}$/$C_{12}$-Alkylester, Di-2-ethylhexylphthalat (DOP), Diisooctylphthalat (DIOP), Diisodecylphthalat (DIDP), Di-n-octylphthalat, Tri-2-ethylhexyltrimellithat (TOTM) und Tri-n-octyltrimellithat.

Als PVC-Komponente können alle für das Power-Slush-Verfahren geeigneten Typen (MVR von 5 bis 50, bevorzugt 10 bis 30 bei 155°C und 21,6 kg Auflagegewicht; mittlerer Teilchendurchmesser 50 - 500 μm, bevorzugt 50 - 300 μm) verwendet werden, die eine Härte im Bereich von 65 bis 85 Shore A aufweisen.

Die erfindungsgemäßen Formmassen können hergestellt werden, indem man das nach im Prinzip bekannten Verfahren hergestellte TPU-Granulat mit den jeweiligen Zuschlagstoffen vermischt und in dem Fachmann bekannter Weise durch Reextrusion kompoundiert. Anschließend kann die erhaltene Formmasse granuliert und durch Kaltmahlen in ein sinterfähiges Pulver überführt werden, das sich für die Verarbeitung nach dem 'Powder-slush'-Verfahren eignet Solche Pulver weisen bevorzugt Korngrößen von 50 bis 800 μm auf, besonders bevorzugt 50 bis 500 μm. Sinterfähige Pulver von Formmassen, die neben TPU nur PVC enthalten, können alternativ statt durch Kompoundierung auch durch Mischen von TPU-Pulver und PVC-Pulver erhalten werden.

Die erfindungsgemäßen Formmasssen eignen sich zur Herstellung verschiedenster Formkörper, beispielsweise von Folien, insbesondere genarbten Sinterfolien. Pulverförmig kann die erfindungsgemäße Polyurethanformmasse nach dem bekannten "Powder-Slush-Verfahren" in beheizbaren Werkzeugen zu Häuten gesintert werden. Das dafür benötigte Pulver wird aus dem Granulat der erfindungsgemäßen Polyurethanformmasse durch Kaltmahlen gewonnen. Das Mahlgut wird in das an einer Seite offene, beheizbare Werkzeug eingebracht und auf der Innenwandung der beheizten Oberfläche innerhalb kurzer Zeit gesintert. Nach dem Abkühlen des Werkzeuges kann die Slush-Haut entnommen werden. Das Verfahren ist also analog demjenigen zur Herstellung von Armaturentafeln-Bespannungen aus PVC-Häuten. Beschrieben ist es beispielsweise in DE-A 39 32 923 als "Powder-Slush-Verfahren".

Das Pulver sintert auf der Innenwandung des beheizten Werkzeuges bereits innerhalb kurzer Zeit zu einer homogenen, von kleinen Löchern und von Blasen freien Folie, die schon nach dem Abkühlen auf nur 100°C ohne Verzug entformt werden kann. Diese Faktoren machen das Sinterverfahren mit der erfindungsgemäßen Formmasse besonders wirtschaftlich.

Die aus dieser Polyurethanformmasse hergestellte Sinterfolie besitzt einen weichen und lederartigen Griff und neigt auch bei Lichteinwirkung nicht zu einer Veränderung des Glanzgrades. Das Narbenbild verändert sich bei der Heißluftalterung (110 bis 120°C) nicht; bei der Wärmealterung durch Lagerung auf einem Gitterrost bei 130°C tritt ebenfalls keine Veränderung auf.

Die. aus den erfindungsgemäßen Polyurethanformmassen hergestellten Sinterfolien eignen sich beispielsweise für den Einsatz als Oberflächenverkleidung in Verkehrsmitteln, z.B. Flugzeugen, Schiffen, Eisenbahnen oder Kraftfahrzeugen, insbesondere als Verkleidung für Instrumententafeln und als Abdeckung für Airbags, da die Folien hervorragend auf dem Polyurethan-Hinterschaum der Instrumententafel haften. Gegenstand der vorliegenden Erfindung ist deshalb auch die Verwendung der erfindungsgemäßen Folien als Oberflächenverkleidung für Instrumententafeln in Verkehrsmitteln, insbesondere in Kraftfahrzeugen.

**Beispiele**

**TPU-Rezepturen:**

**TPU 1 (DE-C 42 03 307)**

| 70,00 Gewichtsteile | Polycarbonatdiol auf Basis 1,6 Hexandiol mit $\overline{M}_n$=2000 |
|---|---|
| 30,00 Gewichtsteile | Polyesterdiol auf Basis Adipinsäure, Hexandiol und Neopentylglykol mit $\overline{M}_n$=2000 |
| 30,00 Gewichtsteile | Hexamethylendiisocyanat |
| 11,88 Gewichtsteile | 1,4 Butandiol |

**TPU2**

| 70,00 Gewichtsteile | Polycarbonatdiol 1,6 Hexandiol mit $\overline{M}_n$=2000 |
| 30,00 Gewichtsteile | Polycaprolactondiol mit $\overline{M}_n$=2000 |
| 30,10 Gewichtsteile | Hexamethylendiisocyanat |
| 11,70 Gewichtsteile | 1,4 Butandiol |

**TPU3**

| 70,00 Gewichtsteile | Polycarbonatdiol 1,6 Hexandiol mit $\overline{M}_n$=2000 |
| 34,00 Gewichtsteile | Polybutandioladipat mit $\overline{M}_n$=2250 |
| 30,20 Gewichtsteile | Hexamethylendiisocyanat |
| 11,70 Gewichtsteile | 1,4 Butandiol |

**Herstellungsverfahren:**

Die Herstellung der aliphatischen thermoplastischen Polyurethane erfolgte im Einstufenverfahren. Polyolkomponenten, Hexamethylendiisocyanat und 1,4-Butandiol wurden auf 90°C vorgewärmt, in einem Extruder polymerisiert und anschließend granuliert.

**Kompoundierung:**

Die Kompoundierung der TPU mit den übrigen Komponenten erfolgte auf einem Extruder des Typs DSE 25, 4 Z, 360 Nm, der folgenden Aufbau aufweist:

1. kalte Einzugszone mit Förderelementen,
2. erste Heizzone (165°C) mit 1. Knetzone,
3. zweite Heizzone (175°C) mit Förderelementen und zweiter Knetzone,
4. dritte Heizzone (180°C) mit Knetzone, Förderelementen und Vakuumentgasung,
5. vierte Heizzone (185°C) mit Förderelementen und einer Mischzone,
6. Umlenkkopf(185°C) und Düse (180°C).

Mit einem Stranggranulator wurde das Material zu Granulat aufgearbeitet. Nach einer ersten Kompoundierung, die mit einer Drehzahl von 220 U/min und einer Förderleistung von 10 kg/h durchgeführt wurde, erfolgte ein zweiter Durchgang mit 220 U/min und einem Durchsatz von 15 kg/h. Vor dem zweiten Durchgang wurde das Granulat im Vakuumtrockenschrank 1 h lang bei 60°C getrocknet.

Nach der Kompoundierung und Granulierung wurde das Material auf einer mit flüssigem Stickstoff gekühlten Pralltellermühle bzw. Scheibenmühle kaltgemahlen. Es wurde ein Pulver mit einem mittleren Partikeldurchmesser <500 µm erhalten.

Die Dosierung der zu kompoundierenden Komponenten kann in unterschiedlicher Weise erfolgen:

a) die vorgemischten Granulate, pulverförmige Additive (Stabilisatoren, Pigmente) und flüssige Komponenten (z. B UV-Stabilisatoren) werden über separate gravimetrische Dosierungen in die Einfüllzone eingebracht;

b) wie a), jedoch werden Flüssigkomponenten über eine Seitendosierung zugeführt;

c) alle Komponenten werden in einem Heizmischer bei 90°C vorgemischt. Hierbei diffundieren die flüssigen Komponenten in das Granulat, dabei verkleben pulverförmige Komponenten mit dem Granulat. So erhält man eine trockene, förderfähige Vormischung, die über eine Dosierung in den Extruder eingebracht werden kann.

**Vergleich 1**

TPU 1 wurde in einem Kompoundierschritt mit Standardpigmenten (2% Elftex® 435 von Cabod), UV-Stabilisator (Tinuvin®328 und 622), Antioxidans (Irganox® 245) und Trennmittel (Loxiol® C78) versetzt, reextrudiert, granuliert und abschließend unter Kühlung mit flüssigem Stickstoff zu feinem Pulver mit einer Kornverteilung von 50 bis 500 µm gemahlen.

**Vergleich 2**

TPU 2 wurde in einem Kompoundierschritt mit Standardpigmenten (2% Elftex® 435 von Cabod), UV-Stabilisator (Tinuvin®328 und 622), Antioxidans (Irganox® 245) und Trennmittel (Loxiol® C78) versetzt, reextrudiert, granuliert und abschließend unter Kühlung mit flüssigem Stickstoff zu feinem Pulver mit einer Komverteilung von 50 bis 500 µm gemahlen.

**Vergleich 3**

TPU 3 wurde in einem Kompoundierschritt mit Standardpigmenten (2% Elftex® 435 von Cabod), UV-Stabilisator (Tinuvin®328 und 622), Antioxidans (Irganox® 245) und Trennmittel (Loxiol® C78) versetzt, reextrudiert, granuliert und abschließend unter Kühlung mit flüssigem Stickstoff zu feinem Pulver mit einer Kornverteilung von 50 bis 500 µm gemahlen.

**Beispiel 1**

73 Gew.Teile TPU 1 wurden mit 20 Gew.-Teilen EVA (Baymod® 2418, Bayer AG) und 7 Gew.-Teilen PMMA (Paraloid® K125, Röhm und Haas) zusammen mit Standardpigmenten (2% Elfte® 435 von Cabod), UV-Stabilisator (Tinuvin®328 und 622), Antioxidans (Irganox®245) und Trennmittel (Loxiol® C78), kompoundiert.

**Beispiel 2**

72 Gew.Teile TPU 3 wurden mit 5 Gew.-Teilen EVA (Baymod® 2418, Bayer AG) und 23 Gew.-Teilen PMMA (Lucryl® G66, BASF AG) zusammen mit Standardpigmenten (2% Elftex® 435 von Cabod), UV-Stabilisator (Tinuvin®328 und 622), Antioxidans (Irganox®245) und Trennmittel (Loxiol® C78) kompoundiert.

**Beispiel 3**

77 Gew.Teile TPU 3 wurden mit 23 Gew.-Teilen PMMA (Lucryl® G66, BASF AG) zusammen mit Standardpigmenten (2% Elftex® 435 von Cabod), UV-Stabilisator (Tinuvin®328 und 622), Antioxidans (Irganox® 245) und Trennmittel (Loxiol® C78) kompoundiert.

**Beispiel 4**

70 Gew.Teile TPU 3 wurden mit 30 Gew.-Teilen PMMA (Lucryl® G66, BASF AG) zusammen mit Standardpigmenten (2% Elftex® 435 von Cabod), UV-Stabilisator (Tinuvin®328 und 622), Antioxidans (Irganox® 245) und Trennmittel (Loxiol® C78) kompoundiert.

**Beispiel 5**

73 Gew.Teile TPU 3 wurden mit 22 Gew.-Teilen PMMA (Lucryl® G66, BASF AG) und 5 Gew.-Teilen 1,2-Benzoldicarbonsäure-C10/C12-Alkylester (Linplast® 1012 BP, RWE-DEA AG für Mineralöl und Chemie, D-47443 Moers) zusammen mit Standardpigmenten (2% Elftex® 435 von Cabod), UV-Stabilisator (Tinuvin®328 und 622), Antioxidans (Irganox®245) und Trennmittel (Loxiol® C78) kompoundiert.

Die in den Beispielen erhaltenen Granulate wurden unter Kühlung mit flüssigem Stickstoff zu feinem Pulver mit einer Kornverteilung von 50 bis 400 µm gemahlen.

**Beispiel 6**

Es wurde eine Pulvermischung aus je 50 Gew.-Teilen Vergleichl-Pulver und PVC-Slushpulver (BK TL 640, Benecke-Kaliko AG, D-30419 Hannover) hergestellt.

Zur Herstellung von Prüfkörpern wurden die Pulver in einem beheizbaren Zylinder mit 21 cm Durchmesser und 15 cm Höhe zu Ringen geslusht. Bei einer durchschnittlichen Füllmenge von ca. 80g dieser TPU-Pulver wurden Slush-Ringe mit ca. 0,8 mm Dicke erhalten.

An den in den Beispielen erhaltenen Materialien wurden folgende Messungen durchgeführt:

Reißfestigkeit und Reißdehnung bei Raumtemperatur gemäß EN ISO 527-3/5,

Reißfestigkeit und Reißdehnung bei -35°Cgemäß EN ISO 527-3/2,

Fogging (3h/100°C) gemäß DIN 75201,

Kondensat (16h/100°C und 16h/120°C) gemäß DIN 75201,

MVR bei 200°C und 2,16 kg gemäß ISO 1133,

Lichtechtheit (5 Zyklen) gemäß DIN 75202,

Wärmelagerung (500 h/120°C), hängend im Umlufttrockenschrank mit +/-2°C Toleranz.

Die Ergebnisse der Messungen sind in der nachfolgenden Tabelle zusammengefaßt:

| | Reißfestigkeit [N/mm²] | | Reißdehnung [%] | | Fogging [%] | Kondensat [mg] | | MVR [cm³/10min] | Lichtechtheit [Note] | | Wärmelagerung (120°C / 500h) | |
|---|---|---|---|---|---|---|---|---|---|---|---|---|
| | RT | -35°C | RT | -35°C | 3 h / 100°C | 16 h / 100°C | 16 h / 120°C | 200°C / 2,16 kg | 1 Zyklus | 5 Zyklen | Reiß-festigkeit | Reiß-dehnung |
| Vergleich 1 | 30 | 38 | 600 | 480 | 88 | 0,5 | 4,4 | 45-60 | 4-5 | 4 | 31 | 580 |
| Vergleich 2 | 30 | - | 635 | - | 93 | 0,5 | 3,1 | 48,67 | 4-5 | 4 | 31 | 620 |
| Vergleich 3 | 32 | 40 | 730 | 330 | 92 | 0,5 | 2,0 | 75,67 | 4-5 | 4 | 31 | 680 |
| Beispiel 1 | 11 | 30 | 300 | 180 | 92 | 1,31 | 4,5 | 46,29 | 4-5 | 4 | | |
| Beispiel 2 | 13 | 22 | 430 | 75 | 90 | 0,80 | 3,6 | 19,40 | 4-5 | 4 | | |
| Beispiel 3 | 15 | 24 | 450 | 101 | 88 | 0,76 | 3,7 | 21,91 | 4-5 | 4 | | |
| Beispiel 4 | 9 | 19 | 30 | 34 | 88 | 0,61 | 3,4 | 17,17 | 4-5 | 4 | | |
| Beispiel 5 | 12 | 20 | 420 | 95 | 85 | 0,8 | 4,0 | 59,22 | 4-5 | 4 | | |
| Beispiel 6 | 13 | 21 | 340 | 69 | 92 | 0,4 | 2,1 | 73,42 | - | - | | |

**Patentansprüche**

1. Sinterfähige thermoplastische Formmasse enthaltend ein thermoplastisches Polyurethan auf Basis eines aliphatischen Diisocyanats, sowie mindestens einen weiteren Vertreter aus der Polyvinylchlorid (PVC), Polymethylmethacrylat (PMMA), Ethylen/Vinylacetat-Copolymere (EVA) und Weichmacher umfassenden Gruppe, wobei die Formmasse einen mittleren Teilchendurchmesser von 50 bis 800 μm aufweist

2. Formmasse gemäß Anspruch 1, die eine Reißfestigkeit bei Raumtemperatur von nicht mehr als 20 N/mm$^2$ und eine Reißdehnung bei Raumtemperatur von nicht mehr als 450% (jeweils gemessenen nach EN ISO 527-3/5) aufweist.

3. Formmasse gemäß Anspruch 2, die eine Reißfestigkeit bei -35°C von nicht mehr als 30 N/mm$^2$ und eine Reißdehnung bei -35°C von nicht mehr als 200% (jeweils gemessenen nach EN ISO 527-3/2) aufweist

4. Sinterfähige thermoplastische Formmasse gemäß Anspruch 1, enthaltend
50 bis 90 Gew.-Teile thermoplastisches Polyurethan auf Basis eines aliphatischen Diisocyanats,
10 bis 50 Gew.-Teile PMMA,
0 bis 10 Gew.-Teile EVA,
0 bis 10 Gew.-Teile Weichmacher.

5. Sinterfähige thermoplastische Formmasse gemäß Anspruch 1, enthaltend
10 bis 90 Gew.-Teile thermoplastisches Polyurethan auf Basis eines aliphatischen Diisocyanats und
10 bis 90 Gew.-Teile PVC.

6. Formmasse gemäß Anspruch 1, enthaltend ein aliphatisches thermoplastisches Polyurethan, das erhalten wird durch Umsetzung von
100 Gewichtsteilen eines Polyolgemisches aus
30 bis 80 Gewichtsteilen eines aliphatischen Polycarbonatdiols mit einem mittleren Molekulargewicht $\overline{M}_n$ von 1800 bis 2200 und
70 bis 20 Gewichtsteilen eines Polyalkandioladipats oder eines Polycaprolactondiols mit einem mittleren Molekulargewicht $\overline{M}_n$ von 1000 bis 4000 und
1,6-Hexamethylendiisocyanat in einem Äquivalenzverhältnis von 2,3:1,0 bis 6,2:1,0, bezogen auf das Polyolgemisch, und
1,4-Butandiol als Kettenverlängerungsmittel in einem Äquivalenzverhältnis von 1,3:1,0 bis 5,2:1,0, bezogen auf das Polyolgemisch,
wobei die NCO-Kennzahl, gebildet aus dem mit 100 multiplizierten Quotienten der Äquivalenzverhältnisse von Isocyanatgruppen und der Summe der Hydroxylgruppen von Polyolgemisch und Kettenverlängerungsmittel, 96 bis 99 beträgt.

7. Formkörper, erhalten nach dem Powder-Slush-Verfahren aus Pulvern der Formmassen gemäß Anspruch 1.

8. Verwendung der Formkörper gemäß Anspruch 7 als Oberflächenverkleidung in Verkehrsmitteln.

**Claims**

1. Sinterable thermoplastic moulding composition comprising a thermoplastic polyurethane based on an aliphatic diisocyanate and at least one further representative from the group consisting of polyvinyl chloride (PVC), polymethyl methacrylate (PMMA), ethylene/vinyl acetate copolymers (EVA) and plasticizers, wherein the moulding composition has an average particle diameter of 50 to 800 μm.

2. Moulding composition according to claim 1 which has a tear strength at room temperature of not more than 20 N/mm$^2$ and an elongation at break at room temperature of not more than 450% (in each case measured in accordance with EN ISO 527-3/5).

3. Moulding composition according to claim 2 which has a tear strength at -35°C of not more than 30 N/mm$^2$ and an elongation at break of -35°C of not more than 200% (in each case measured in accordance with EN ISO 527-3/2).

**4.** Sinterable thermoplastic moulding composition according to claim 1, comprising
50 to 90 parts by wt. thermoplastic polyurethane based on an aliphatic diisocyanate,
10 to 50 parts by wt. PMMA,
0 to 10 parts by wt. EVA,
0 to 10 parts wt. plasticizer.

**5.** Sinterable thermoplastic moulding composition according to claim 1, comprising
10 to 90 parts by wt. thermoplastic polyurethane based on an aliphatic diisocyanate and
10 to 90 parts by wt. PVC.

**6.** Moulding composition according to claim 1, comprising an aliphatic thermoplastic polyurethane which is obtained by reaction of
100 parts by weight of a polyol mixture of
30 to 80 parts by weight of an aliphatic polycarbonate-diol with an average molecular weight $\overline{M}_n$ of 1,800 to 2,200 and
70 to 20 parts by weight of a polyalkanediol adipate or a polycaprolactonediol with an average molecular weight $\overline{M}_n$ of 1,000 to 4,000 and
hexamethylene 1,6-diisocyanate in an equivalent ratio of 2.3:1.0 to 6.2:1.0, based on the polyol mixture, and
1,4-butanediol as a chain lengthening agent in an equivalent ratio of 1.3:1.0 to 5.2:1.0, based on the polyol mixture,
the NCO index, formed from the quotient, multiplied by 100, of the equivalent ratios of isocyanate groups and the sum of the hydroxyl groups of the polyol mixture and chain lengthening agent, being 96 to 99.

**7.** Shaped article obtained by the powder-slush process from powders of the moulding compositions according to claim 1.

**8.** Use of the shaped articles according to claim 7 as a surface lining in means of transport.


**Revendications**

**1.** Masse à mouler thermoplastique frittable contenant un polyuréthane thermoplastique à base d'un diisocyanate aliphatique, ainsi qu'au moins un autre représentant du groupe comprenant le poly(chlorure de vinyle) (PVC), le poly(méthacrylate de méthyle) (PMMA), les copolymères éthylène/acétate de vinyle (EVA) et les plastifiants, où la masse à mouler présente un diamètre particulaire moyen de 50 à 800 $\mu$m.

**2.** Masse à mouler selon la revendication 1 qui présente une résistance au déchirement à la température ambiante d'au plus 20 N/mm$^2$ et un allongement au déchirement à la température ambiante d'au plus 450 % (mesurés dans chaque cas selon EN ISO 527-3/5).

**3.** Masse à mouler selon la revendication 2 qui présente une résistance au déchirement à -35°C d'au plus 30 N/mm$^2$ et un allongement au déchirement à -35°C d'au plus 200 % (mesurés dans chaque cas selon EN ISO 527-3/2).

**4.** Masse à mouler thermoplastique frittable selon la revendication 1, contenant
50 à 90 parties en masse de polyuréthane thermoplastique à base d'un diisocyanate aliphatique,
10 à 50 parties en masse de PMMA,
0 à 10 parties en masse de EVA,
0 à 10 parties en masse de plastifiant.

**5.** Masse à mouler thermoplastique frittable selon la revendication 1, contenant
10 à 90 parties en masse de polyuréthane thermoplastique à base d'un diisocyanate aliphatique et
10 à 90 parties en masse de PVC.

**6.** Masse à mouler selon la revendication 1, contenant un polyuréthane thermoplastique aliphatique qui est obtenu par réaction de
100 parties en masse d'un mélange de polyols constitué par
30 à 80 parties en masse d'un polycarbonatediol aliphatique ayant une masse moléculaire moyenne $\overline{M}_n$ de 1800 à 2200 et
70 à 20 parties en masse d'un adipate de polyalcanediol ou d'un polycaprolactonediol ayant une masse

moléculaire moyenne $\overline{M}_n$ de 1000 à 4000 et de 1,6-hexaméthylènediisocyanate dans un rapport d'équivalents de 2,3:1,0 à 6,2:1,0, par rapport au mélange de polyols, et

du 1,4-butanediol comme agent d'allongement de chaîne dans un rapport d'équivalents de 1,3 :1,0 à 5,2 : 1,0, par rapport au mélange de polyols,

où l'indice NCO, formé à partir du quotient multiplié par 100 des rapports d'équivalents de groupes isocyanate et de la somme des groupes hydroxyle du mélange de polyols et de l'agent d'allongement de chaîne, est de 96 à 99.

7. Corps moulé obtenu selon le procédé Powder-Slush à partir de poudres des masses à mouler selon la revendication 1.

8. Utilisation des corps moulés selon la revendication 7 comme habillage de surface dans des moyens de communication.